# EUROPÄISCHE PATENTANMELDUNG

(11) **EP 4 596 115 A1**
(43) Veröffentlichungstag der Anmeldung: **06.08.2025**
(21) Anmeldenummer: 25152982.2
(22) Anmeldetag: 21.01.2025
(51) Int. Cl.: B05C 11/10

(54) **SYSTEM UND VERFAHREN ZUM APPLIZIEREN VON SCHMELZKLEBSTOFF**

(30) Priorität: 05.02.2024 DE 102024103110
(71) Anmelder: KHS GmbH, 44143 Dortmund (DE)
(72) Erfinder: Caninenberg, Matthias, 44143 Dortmund (DE); Koppers, Jörg, 44143 Dortmund (DE); Tervoort, Leon, 44143 Dortmund (DE); Lelie, Thomas, 44143 Dortmund (DE); Düpper, Josef, 44143 Dortmund (DE)

(57) **Zusammenfassung**

Die Erfindung bezieht sich auf ein System (1) zum Applizieren von Schmelzklebstoff auf Behälter, insbesondere auf Getränkebehälter. Das System (1) weist zumindest eine Klebstoffversorgung (2) zum Bereitstellen des Schmelzklebstoffs und wenigstens einen Applizierkopf (3) mit mindestens einer Klebstoffdüse (3.1) zum Aufbringen des Schmelzklebstoffs auf die Behälter auf. Die Klebstoffversorgung (2) umfasst wenigstens eine Klebstoffzuführung (4) zum Zuführen des Schmelzklebstoffs zu dem wenigstens einen Applizierkopf (3) in einer Fließrichtung (FR). Ferner weist das System (1) wenigstens eine Klebstoffrückführung (5) zum Rückführen des Schmelzklebstoffs von dem mindestens einen Applizierkopf (3) zu der Klebstoffversorgung (2) auf. Dadurch ist der Schmelzklebstoff in einem geschlossenen Schmelzklebstoffkreislauf (SK) förderbar. Erfindungsgemäß ist vorgesehen, dass das System (1) eine Regelventilanordnung (6) zum Regeln eines in dem Schmelzklebstoffkreislauf (SK) vorherrschenden Schmelzklebstoff-Druckes (p) aufweist.

## Beschreibung

Die Erfindung bezieht sich auf ein System sowie auf ein Verfahren zum Applizieren von Schmelzklebstoff auf Behälter, insbesondere auf Getränkebehälter.

Vorrichtungen bzw. Systeme zum Applizieren von Klebstoff, insbesondere auch von Schmelzklebstoff, welcher auch als Heißleim bezeichnet werden kann, sind grundsätzlich bekannt. Solche Vorrichtungen oder Systeme weisen in der Regel mindestens einen Applizierkopf auf, an welchem wenigstens eine Düse, nämlich eine Klebstoffdüse, vorgesehen ist, an der die Ausbringung des Klebstoffs oder Schmelzklebstoffs erfolgt.

Auch in der Getränkeindustrie werden beispielsweise derartige Vorrichtungen oder Systeme eingesetzt und insbesondere in Verpackungsmaschinen oder -anlagen zur Herstellung von Behältergebinden verwendet. Hierbei werden zum Beispiel die zu Gebinden zu verarbeitenden Behälter mit punktuellen Klebstoffaufträgen versehen, um die Behälter untereinander zu verkleben. Derartige Verpackungsmaschinen oder -anlagen mit einer Vorrichtung zum Applizieren von Klebstoff bzw. Schmelzklebstoff sind beispielsweise aus den Druckschriften DE 10 2012 100 810 A1 oder EP 3 245 141 B1 bekannt geworden.

Insbesondere ist es zum Beispiel in der Getränkeindustrie bei der Erzeugung von Behältergebinden mittels Klebstoffaufträgen besonders bedeutsam, dass beim Klebstoff-Auftrag jeweils exakt eingestellte Klebstoff- bzw. Klebermengen, beispielsweise in einem Bereich von 50 mg bis 250 mg in sehr kurzen Auftragszeiten auf die Behälter aufgebracht und dabei gleichzeitig geringe Toleranzen eingehalten werden. Diese geringen Toleranzen sind vor allem deshalb entscheidend, da bei einer Abweichung der Klebstoffmenge (nach oben oder unten) mangelbehaftete Gebinde erzeugt werden. So sind beispielsweise die Behälter eines jeweiligen Behältergebindes nicht mehr oder nur schwer voneinander zu lösen, falls die aufgebrachte Klebstoffmenge zu groß ist. Andernfalls können die Behälter eines jeweiligen Behältergebindes von selbst oder bereits bei geringer Krafteinwirkung auseinanderfallen, wenn die aufgebrachte Klebstoffmenge zu gering ist.

Um die Klebstoffmengen innerhalb des zulässigen Toleranzbereiches exakt einhalten zu können, sind bestimmte Vorkehrungen zu treffen. Ein besonders wichtiger Einflussfaktor für die Einhaltung der Klebstoffmengen ist dabei der in dem entsprechenden System zum Applizieren des Klebstoffs vorherrschende Druck, welcher auch als Klebstoff- oder Kleberdruck bzw. als Schmelzklebstoff- oder Schmelzkleberdruck bezeichnet oder auch als Systemdruck verstanden werden kann.

Bei den bekannten Vorrichtungen bzw. Systemen wird dieser Druck mechanisch oder pneumatisch fest eingestellt, und zwar mittels einer einfachen Steuerung, insbesondere mit einer einfachen Drucksteuerung.

In der Praxis ergibt sich dabei jedoch das Problem, dass der Druck nur wenig präzise eingestellt werden kann. Über die einfache Drucksteuerung, wie sie in bekannten Systemen verwendet wird, kann der gewünschte bzw. erforderliche Druck nicht exakt eingehalten oder konstant auf dem vorgegebenen Wert gehalten werden. Nachteilig können bei der im Stand der Technik verwendeten festen Einstellung des Drucks mittels der üblichen Steuerung auch mögliche, auftretende Druckschwankungen nicht ausgeglichen werden.

Derartige Druckschwankungen treten jedoch im Betrieb eines Systems zum Applizieren von Schmelzklebstoff häufig auf und können sich insbesondere in Abhängigkeit vom Betriebszustand ergeben, beispielsweise bei Betriebsstart, beim Anfahren nach einer Betriebsverzögerung oder nach einem Betriebsstopp oder wenn Parameter im Zuge eines Formatwechsels oder dergleichen geändert werden oder auch aufgrund von Verschmutzungen, Klebstoffverkrustungen oder Abnutzungen bei anhaltendem Betrieb. Daher besteht weiterhin Bedarf an verbesserten Systemen zum Applizieren von Schmelzklebstoff.

Eine Aufgabe der Erfindung ist es, ein System zum Applizieren von Schmelzklebstoff anzugeben, das eine höhere Prozesssicherheit und Prozessgenauigkeit erlaubt.

Diese Aufgabe wird durch das System gemäß den Merkmalen des unabhängigen Patentanspruchs 1 gelöst. Ein Verfahren zum Applizieren von Schmelzklebstoff ist Gegenstand des Patentanspruchs 17. Vorteilhafte Weiterbildungen und Ausführungsformen der Erfindung sind in den abhängigen Ansprüchen angegeben.

Die vorliegende Erfindung stellt ein System zum Applizieren von Schmelzklebstoff auf Behälter zur Verfügung. Das System weist zumindest eine Klebstoffversorgung zum Bereitstellen des Schmelzklebstoffs und wenigstens einen Applizierkopf mit mindestens einer Klebstoffdüse zum Aufbringen des Schmelzklebstoffs auf die Behälter auf. Die Klebstoffversorgung umfasst dabei eine Klebstoffzuführung zum Zuführen des Schmelzklebstoffs zu dem wenigstens einen Applizierkopf in einer Fließrichtung. Das System weist außerdem eine Klebstoffrückführung zum Rückführen des Schmelzklebstoffs von dem mindestens einen Applizierkopf zu der Klebstoffversorgung auf. Auf diese Weise ist der Schmelzklebstoff in einem geschlossenen Schmelzklebstoffkreislauf förderbar. Die Erfindung zeichnet sich insbesondere dadurch aus, dass das System eine Regelventilanordnung zum Regeln eines in dem Schmelzklebstoffkreislauf vorherrschenden Schmelzklebstoff-Druckes aufweist.

Aufgrund der vorgesehenen Regelung mittels der Regelventilanordnung erlaubt das erfindungsgemäße System eine exakte Einstellung, nämlich ein Einregeln, des Schmelzklebstoff-Druckes auf einen vorgegebenen Sollwert sowie auch die präzise Aufrechterhaltung und Einhaltung dieses vorgegebenen Sollwerts für den Schmelzklebstoff-Druck. Das erfindungsgemäße System ermöglicht damit ein sicheres Konstanthalten des Schmelzklebstoff-Druckes. Die genannten Vorteile ergeben sich insbesondere aus der Tatsache, dass die vorgesehene Regelung in dem erfindungsgemäßen System ein geschlossener Wirkungskreis, nämlich ein Regelkreis ist. Die Führungsgröße in dem geschlossenen Regelkreis ist der vorgegebene Sollwert des konstant zu haltenden Schmelzklebstoff-Drucks.

Bei den Behältern handelt es sich vorzugsweise um Getränkebehälter, wie z.B. Flaschen, insbesondere PET-Flaschen, und/oder Dosen und/oder Getränkekartons.

Das "System" kann im Sinne der vorliegenden Erfindung auch als Vorrichtung zum Applizieren von Schmelzklebstoff verstanden werden und kann insbesondere in einer Maschine oder Anlage zur Herstellung von Behältergebinden zum Einsatz kommen oder auch Teil bzw. Bestandteil einer solchen Maschine oder Anlage sein. Insbesondere kann das System in der Getränkeindustrie angewandt und dabei in einer Behandlungs- oder Verpackungsmaschine zum Behandeln oder Verpacken von Getränkebehältern integriert sein.

Besondere Vorteile ergeben sich mit dem erfindungsgemäßen System ferner dadurch, dass auch auftretende Druckschwankungen berücksichtigt und ausgeglichen werden können. Insbesondere können Druckschwankungen ausgeglichen werden, die in Abhängigkeit des Betriebszustands des Systems auftreten, wodurch ein gewünschter, konstanter Schmelzklebstoff-Druck unabhängig bzw. im Wesentlichen unabhängig vom Betriebszustands eingehalten werden kann.

Die Prozesssicherheit und Prozessgenauigkeit des Systems ist damit deutlich erhöht gegenüber herkömmlichen Systemen. Dies bewirkt insbesondere auch, dass beispielsweise bei der Herstellung von Behältergebinden durch Verkleben, beim Applizieren des Schmelzklebstoffs auf die Behälter in jedem Appliziervorgang dieselbe erforderliche, definierte Klebstoffmenge aufgebracht wird um stabile, qualitativ hochwertige Behältergebinde zu erzeugen. Dabei kann die erforderliche Klebstoffmenge präzise und exakt innerhalb eines engen Toleranzbereiches eingehalten werden. Vorteilhaft können die Toleranzen der Klebstoffpunktgewichte verringert werden.

Das erfindungsgemäße System führt damit zu einer verbesserten Qualität der erzeugten Behältergebinde und zu geringerem Ausschuss. Der reduzierte Ausschuss ergibt sich mit dem vorliegenden System nicht zuletzt auch darüber, dass aufgrund der Druckregelung auch in einem Betriebszustand des Anfahrens oder Hochfahrens bereits die vorgesehene Klebstoffmenge appliziert wird und dadurch von Betriebsbeginn an hochwertige, die entsprechende Qualität aufweisende Behältergebinde erzeugt werden können.

Damit hebt sich das vorliegende System vorteilhaft von bekannten Systemen des Standes der Technik ab, in denen der Schmelzklebstoff-Druck über eine einfache Steuerung in Form einer offenen Wirkungskette fest eingestellt wird.

Die Klebstoffzuführung der Klebstoffversorgung ist im vorliegenden Sinne im Wesentlichen als eine Klebstoffleitung, beispielsweise als Schlauch- oder Rohrleitung zu verstehen. Die Klebstoffversorgung des vorliegenden Systems umfasst ferner vorzugsweise neben der Klebstoffzuführung einen Vorlagebehälter für den Schmelzklebstoff, welcher auch als Tank bzw. Schmelzklebstofftank bezeichnet werden kann. Der Vorlagebehälter bzw. Schmelzklebstofftank ist an die Klebstoffzuführung angeschlossen, insbesondere fluidisch dicht mit der Klebstoffzuführung verbunden.

Über eine vorzugsweise vorgesehene Heizeinrichtung, welche dazu ausgelegt ist, zumindest den Vorlagebehälter bzw. Schmelzklebstofftank, insbesondere aber auch die Klebstoffzuführung, zu beheizen, kann der im Schmelzklebstofftank bereitgestellte Schmelzklebstoff auf eine vorgegebene Temperatur, insbesondere auf eine Schmelztemperatur und/oder Verarbeitungstemperatur erwärmt werden, so dass der Schmelzklebstoff in dem Schmelzklebstofftank in viskoser, fließfähiger Form vorgehalten wird und in dieser viskosen, fließfähigen Beschaffenheit auch in der Klebstoffzuführung gefördert wird. Je nach verwendetem Schmelzklebstoff kann die Schmelztemperatur von der Verarbeitungstemperatur abweichen, insbesondere kann die Verarbeitungstemperatur höher sein als die Schmelztemperatur. Beispielsweise kann für einen ausgewählten Schmelzklebstoff die Schmelztemperatur rund 130° C betragen, während die Verarbeitungstemperatur in einem Bereich von etwa 160° C bis 190° C liegt.

Der wenigstens eine in dem System vorgesehene Applizierkopf, welcher vorliegend auch als Applikationskopf bzw. Applikatorkopf oder als Kleber-Auftragskopf bzw. Leim-Auftragskopf bezeichnet werden kann, ist beispielsweise in einer der Fachperson bekannten Weise ausgeführt. Bei dem vorliegenden System können auch mehrere, vorzugsweise in Reihe hintereinander geschaltete Applizierköpfe vorgesehen sein, wobei jeder der mehreren Applizierköpfe mit jeweils mindestens einer Klebstoffdüse ausgestattet ist. Beispielsweise können bei dem System zwei oder drei oder vier Applizierköpfe in Reihe hintereinander angeordnet sein. Der viskose, fließfähige Schmelzklebstoff wird durch den Applizierkopf bzw. durch die Applizierköpfe geführt.

An dem Applizierkopf bzw. an jedem Applizierkopf wird über die Klebstoffdüse(n) die vorgegebene, exakte Menge an Schmelzklebstoff abgegeben und auf die Behälter aufgebracht bzw. aufgetragen, um dadurch punktuelle Klebestellen bzw. Klebepunkte auf den Behältern zu erzeugen. Jedes dieser "Abgabe- und Auftragsereignisse" kann dabei als Appliziervorgang bezeichnet werden. Der Applizierkopf bzw. jeder Applizierkopf des Systems arbeitet dabei beispielsweise mit einer Frequenz von bis zu 500 Appliziervorgängen pro Minute. In jedem Appliziervorgang wird somit ein kleiner Anteil des über die Klebstoffzuführung angeförderten Schmelzklebstoffs aus dem System ausgetragen. Der Hauptanteil des in der Klebstoffzuführung geförderten Schmelzklebstoffs wird über die Klebstoffrückführung wieder zurückgeführt, so dass der geschlossene Schmelzklebstoffkreislauf aufrechterhalten ist.

Die Klebstoffrückführung ist - wie auch die Klebstoffzuführung - im vorliegenden Sinne im Wesentlichen als eine Klebstoffleitung, beispielsweise als Schlauch- oder Rohrleitung zu verstehen. Die Klebstoffrückführung führt den Schmelzklebstoff von dem Applizierkopf zurück zu der Klebstoffversorgung und kann dabei fluidisch mit dem Vorlagebehälter bzw. Schmelzklebstofftank oder mit der Klebstoffzuführung verbunden sein. Optional ist auch die Klebstoffrückführung mittels der Heizeinrichtung beheizbar.

Gemäß einer vorteilhaften Ausführungsvariante des vorliegenden Systems ist die Regelventilanordnung zum Regeln des Schmelzklebstoff-Druckes in der Klebstoffrückführung angeordnet. In dieser bevorzugten Variante ergeben sich besondere zusätzliche Vorteile, da das Regeln des Schmelzklebstoff-Druckes, nämlich das "Einregeln" des Schmelzklebstoff-Druckes in demjenigen Bereich des geschlossenen Schmelzklebstoffkreislaufs erfolgt, der in Fließrichtung des Schmelzklebstoffs nach dem Applizierkopf bzw. nach den Applizierköpfen angeordnet ist.

Mit jedem am Applizierkopf bzw. den Applizierköpfen durchgeführten Appliziervorgang kann mit dem Austrag der entsprechenden Menge(n) an Schmelzklebstoff ein Druckabfall einhergehen. Durch das "Einregeln" des Schmelzklebstoff-Druckes in der Klebstoffrückführung kann dies in besonders effektiver Weise mitberücksichtigt und ausgeglichen werden.

Weiterhin bevorzugt weist die Regelventilanordnung eine Regelventileinheit auf, welche ein regelbares Stellventil mit einem Ventilantrieb zum Einstellen des Stellventils umfasst. Mit dem regelbaren Stellventil ist insbesondere der Durchfluss des Schmelzklebers effektiv veränderbar und kann entsprechend variiert, insbesondere geregelt werden. Mit Veränderung bzw. Regelung des Durchflusses wird wiederum der Schmelzklebstoff-Druck in dem geschlossenen Schmelzklebstoffkreislauf verändert, insbesondere eingestellt, nämlich geregelt. In der bevorzugten Ausführungsform, in der sich die Regelventilanordnung in der Klebstoffrückführung befindet, ist somit vorzugsweise der Durchfluss des Schmelzklebers durch die Klebstoffrückführung veränderbar bzw. regelbar.

Besondere Vorteile ergeben sich bei dem System darüber, dass zum Einstellen des Stellventils ein pneumatischer Ventilantrieb vorgesehen ist. Das Stellventil ist dabei insbesondere durch Zuführung von Druckluft einstellbar.

Gemäß einer besonders bevorzugten Ausführungsvariante des Systems weist die Regelventilanordnung einen Ventilantriebsregler zur geregelten Einstellung des Stellventils auf. Insbesondere weist das System dabei ferner wenigstens eine Regeleinrichtung auf, die zumindest mit der Regelventilanordnung, insbesondere mit dem Ventilantriebsregler, in kommunizierender Verbindung steht, um an den Ventilantriebsregler ein entsprechendes Steuer- und/oder Regelsignal, nämlich beispielsweise das Stellsignal, zu übermitteln, wobei der Ventilantriebsregler wiederum basierend auf dem Stellsignal einen Stellhub auslöst bzw. bewirkt, und auf diese Weise das Stellventil einstellt bzw. regelt. Die Regeleinrichtung kann dabei beispielsweise auch als ein übergeordneter Regler bzw. als übergeordnete Regeleinheit verstanden werden.

Der Ventilantriebsregler kann vorliegend auch als Stellungsregler bezeichnet werden, welcher auf das Stellventil einwirkt. Das Stellventil wiederum stellt dabei beispielsweise das Stellglied dar. Der Ventilantriebsregler ist beispielsweise ein pneumatischer Stellungregler, beispielsweise ein einfach wirkender pneumatischer Stellungregler mit einem Eingang, wobei als Hilfsenergie zur Regelung eines Stellhubes, das heißt zur Einstellung einer Öffnungsstellung des Stellventils, Druckluft verwendet werden kann.

Der Ventilantriebsregler ist dabei besonders bevorzugt ein Stellungsregler, der die Öffnungsstellung des Stellventils in Abhängigkeit des Schmelzklebstoff-Druckes regelt.

In der bevorzugten Ausführungsvariante des Systems mit Ventilantriebsregler ist dieser besonders vorteilhaft dazu ausgebildet, die Zuführung von Druckluft für die Einstellung des Ventilantriebs zu regeln. Insbesondere kann der Ventilantriebsregler dabei die Zuführung von Druckluft für die Einstellung des Ventilantriebs derart regeln, dass das Stellventil mittels der geregelten Druckluftzuführung eine Öffnungsstellung einnimmt, um den Schmelzklebstoff-Druck auf einen vorgegebenen Sollwert einzuregeln.

Besonders bevorzugt weist die Druckluft bei Bereitstellung an den Ventilantriebsregler einen Eingangsdruck von 6 bar oder im Wesentlichen 6 bar auf. Um Druckluft mit 6 bar oder rund 6 bar an den Ventilantriebsregler bereitzustellen, ist das System insbesondere an eine Druckluftversorgung oder an ein Druckluftnetz mit einem Netzdruck von rund 6 bar angeschlossen. Da in verfahrenstechnischen Anlagen, insbesondere auch in der Getränkeindustrie, beispielweise in Getränkeabfüll- und/oder Verpackungsanlagen, in der Regel ein Druckluftnetz mit einem Netzdruck von etwa 6 bar vorhanden ist, ergibt sich hierüber der Vorteil einer konstruktiv einfachen Ausgestaltung.

Gemäß einer bevorzugten Ausführungsvariante des Systems ist der Ventilantriebsregler durch ein Proportionalventil gebildet. Dabei ist insbesondere ein Ausgangsdruck des Proportionalventils kontinuierlich und stufenlos veränderbar und einstellbar. Durch den Einsatz eines Proportionalventils ist es möglich, die Regelung auf effektive Weise vorzunehmen. Unter Verwendung des Proportionalventils erfolgt die Regelung bzw. Einstellung des Stellventils, damit also die Einstellung des Durchflusses an Schmelzkleber, mittels des kontinuierlich und stufenlos einstellbaren Ausgangsdrucks des Proportionalventils. Der Ausgangsdruck des Proportionalventils kann vorliegend als Druckluft-Druck nach dem Proportionalventil verstanden werden, welcher auf das Stellventil wirkt, um dieses zu verstellen bzw. um dessen Öffnungsstellung einzustellen.

Mittels des Proportionalventils kann daher sicher und wirksam, je nach Maschinenzustand, somit also auch bei einem Maschinenstart, beim Wiederanfahren nach Betriebsstopp oder Betriebsverzögerung, bei einem so genannten Hoch- und Herunterrampen, bei Temperaturänderungen oder dergleichen, ein gewünschter, vorgegebener, optimaler Druck, insbesondere Schmelzklebstoff-Druck oder Systemdruck, eingestellt werden. Auch können damit effektiv Druckschwankungen ausgeglichen werden. Das Proportionalventil wirkt dabei vorzugsweise mit der Regeleinrichtung zusammen, welche eine übergeordnete Regeleinheit bildet, wobei das Proportionalventil in Kombination mit einer in der Regeleinrichtung ausgeführten Software funktioniert.

Alternativ und ebenso bevorzugt ist der Ventilantriebsregler durch ein Mehrwegeventil gebildet, beispielsweise durch ein getaktet betriebenes Mehrwegeventil. Insbesondere bevorzugt kann der Ventilantriebsregler dabei durch ein getaktet betriebenes 3/2-Wegeventil gebildet sein. In diesem Fall ist zur Einstellung eines Ausgangsdrucks des Mehrwegeventils bzw. des 3/2-Wegeventils durch den getakteten Betrieb des Mehrwegeventils bzw. 3/2-Wegeventils insbesondere eine pulsbreitenmodulierte Druckluft bereitstellbar. Unter Verwendung des getaktet betriebenen Mehrwegeventils bzw. 3/2-Wegeventils erfolgt die Regelung bzw. Einstellung des Stellventils, damit also wiederum die Einstellung des Durchflusses an Schmelzkleber, mittels eines konstanten aber getakteten Ausgangsdrucks nach dem Mehrwegeventil bzw. 3/2-Wegeventil.

Dieser konstante aber getaktete Druck der Druckluft, nämlich die pulsbreitenmodulierte Druckluft, dient dem Verstellen bzw. Einstellen der Öffnungsstellung des Stellventils und manipuliert so den Schmelzkleberdruck. Vorteilhaft kann darüber ein Losbrechmoment des Stellventils effektiv eliminiert werden. Eine Taktung des getaktet betriebenen 3/2-Wegeventils kann je nach Anwendungsfall hoch- oder niederfrequent sein.

Gemäß einer besonders bevorzugten Ausführungsvariante der Erfindung umfasst der Ventilantriebsregler ein Proportionalventil und ein (vorzugsweise getaktet betriebenes) Mehrwegeventil, insbesondere ein getaktet betriebenes 3/2-Wegeventil. In dieser Ausführungsform ist das Proportionalventil dem Mehrwegeventil bzw. dem getaktet betriebenen 3/2-Wegeventil vorgeschaltet. Das Mehrwegeventil bzw. das getaktet betriebene 3/2-Wegeventil arbeitet dann nicht mit einem fest eingestellten Druck von beispielsweise 6 bar, sondern mit einem mittels des Proportionalventils variabel veränderbaren Druck. Diese Anordnung einer Kombination aus Proportionalventil und getaktetem Mehrwegeventil bzw. 3/2-Wegeventil vereint die Vorteile, dass das Losbrechmoment des Stellventils effektiv eliminiert und zugleich der Schmelzkleberdruck äußerst genau geregelt werden kann. Das heißt, das Proportionalventil regelt ausgesprochen präzise den Schmelzkleberdruck während das Mehrwegeventil bzw. 3/2-Wegeventil für eine kontinuierliche Taktung sorgt.

Weiterhin bevorzugt ist bei dem System ferner eine Pumpeinheit zum Fördern des Schmelzklebstoffs in Fließrichtung vorgesehen, wobei die Pumpeinheit vorzugsweise in der Klebstoffzuführung angeordnet ist.

Vorzugsweise ist außerdem in der Klebstoffzuführung eine Sicherheitsventileinheit, insbesondere ein als Überdruckventil funktionierendes Bypassventil, vorgesehen, wobei die Sicherheitsventileinheit in Fließrichtung des Schmelzklebstoffs bevorzugt nach der Pumpeinheit vorgesehen ist.

Weiterhin bevorzugt ist bei dem System mindestens eine Druckmesseinrichtung zum Messen des Schmelzklebstoff-Drucks vorgesehen. Die Druckmesseinrichtung dient dabei insbesondere als Messglied für die Regelung des Schmelzklebstoff-Drucks auf einen Sollwert, wobei Messwerte der Druckmesseinrichtung als Ist-Werte in die Regelung eingehen.

Weitere Vorteile ergeben sich für das System dadurch, dass wenigstens eine Durchflussmesseinrichtung vorgesehen ist, über welche die Menge des applizierten Schmelzklebstoffs ermittelt werden kann.

Gemäß einem weiteren Aspekt bezieht sich die Erfindung auf eine Vorrichtung zur Bildung von mehreren Behältern umfassenden Verpackungseinheiten. Die Verpackungseinheiten werden dabei durch Verkleben der Behälter untereinander mittels applizierten Schmelzklebstoffaufträgen gebildet. Die Applizierung des Schmelzklebstoffs erfolgt dabei mittels eines vorbeschriebenen Systems zum Applizieren von Schmelzklebstoff.

Vorzugsweise umfasst die Vorrichtung zur Bildung von Verpackungseinheiten eine Abbindestation zum Zusammenführen und/oder Zusammendrücken der mit Schmelzklebstoffaufträgen versehenen Behälter. Darüber hinaus kann eine der Abbindestation nachgelagerte Traggriff-Applikationseinheit zum Anbringen von Traggriffen auf die Verpackungseinheiten vorgesehen sein. Optional kann die Vorrichtung zur Bildung von Verpackungseinheiten zudem vor dem System zum Applizieren von Schmelzklebstoff eine Orientierungseinrichtung zum Ausrichten der Behälter gemäß einer vorgegebenen Soll-Ausrichtung aufweisen.

Die vorliegende Erfindung betrifft auch ein Verfahren zum Applizieren von Schmelzklebstoff auf Behälter, insbesondere auf Getränkebehälter. Bei dem Verfahren wird ein Schmelzklebstoff mittels einer Klebstoffversorgung bereitgestellt und über eine Klebstoffzuführung wenigstens einem Applizierkopf mit mindestens einer Klebstoffdüse zugeführt. Der Schmelzklebstoff wird mittels einer Klebstoffrückführung wieder zurückgeführt, so dass der Schmelzklebstoff in einem geschlossenen Schmelzklebstoffkreislauf gefördert wird. Über die Klebstoffdüse wird bei dem Verfahren Schmelzklebstoff auf die Behälter aufgebracht. Der besondere Aspekt des Verfahrens ist darin zu sehen, dass ein in dem Schmelzklebstoffkreislauf vorherrschender Schmelzklebstoff-Druck mittels einer Regelventilanordnung auf einen Sollwert des Schmelzklebstoff-Druckes geregelt wird.

Bevorzugt wird der Schmelzklebstoff-Druck bei dem vorliegenden Verfahren in Abhängigkeit eines in dem Schmelzklebstoffkreislauf gemessenen Ist-Wertes des Schmelzklebstoff-Druckes auf den Sollwert geregelt.

Weiterhin bevorzugt wird der Schmelzklebstoff insbesondere im laufenden Betrieb, das heißt bei aktiver bzw. geöffneter Klebstoffdüse, mittels der Klebstoffrückführung zurückgeführt.

Weiterbildungen, Vorteile und Anwendungsmöglichkeiten der Erfindung ergeben sich auch aus der nachfolgenden Beschreibung von Ausführungsbeispielen und aus den Figuren.

Die Erfindung wird im Folgenden anhand der Figuren an Ausführungsbeispielen näher erläutert. Es zeigen:
- Fig. 1: beispielhaft und stark vereinfacht eine Ausführungsform des Systems zum Applizieren von Schmelzklebstoff anhand eines grob schematischen Blockschaltbildes;
- Fig. 2: beispielhaft und stark vereinfacht eine weitere Ausführungsform des Systems zum Applizieren von Schmelzklebstoff anhand eines grob schematischen Blockschaltbildes;
- Fig. 3: eine grob schematische und stark vereinfachte Darstellung der Regelventilanordnung und
- Fig. 4: anhand eines stark vereinfacht skizzierten Diagrammes eine Regelung gemäß einer Ausführungsform des vorliegenden Systems.

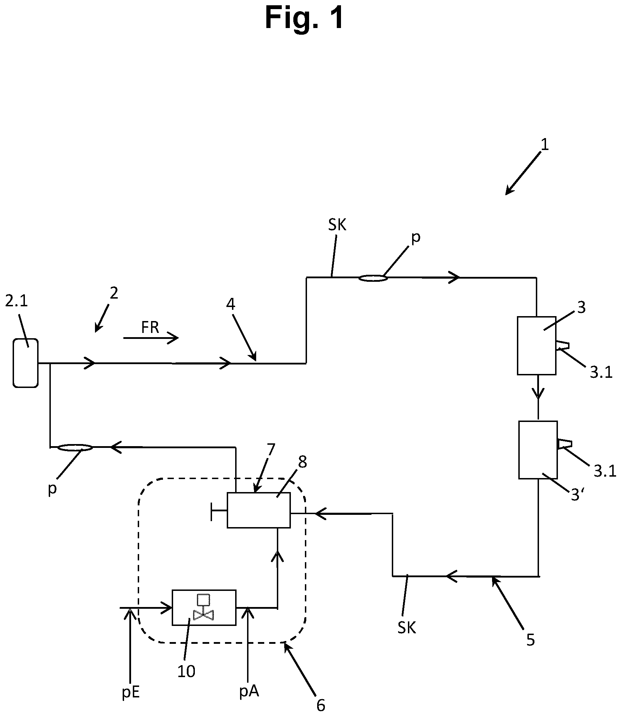

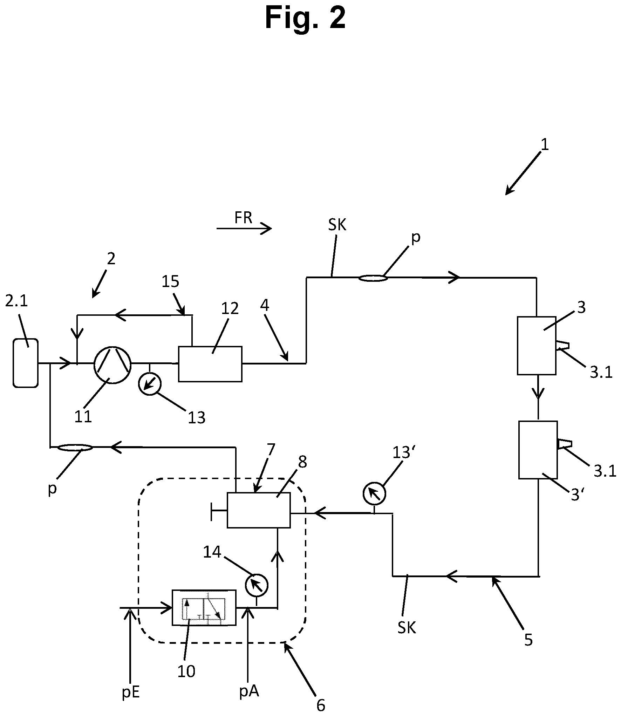

In jeder der Figuren 1 und 2 sind jeweils beispielhaft verschiedene Ausführungsformen eines Systems 1 zum Applizieren von Schmelzklebstoff in einer jeweils stark vereinfachten und grob schematischen, diagrammartigen Darstellung gezeigt.

Das in den Figuren beispielhaft dargestellte und vorliegend beschriebene System 1 wird vorzugsweise in einer Behälterbehandlungsmaschine oder -anlage, insbesondere in einer Verpackungsmaschine zur Erzeugung von Behältergebinden, beispielsweise in der Getränkeindustrie eingesetzt. Das System 1 kann dabei auch als Bestandteil einer solchen Verpackungsmaschine in diese integriert sein.

Das System 1 weist eine Klebstoffversorgung 2 zum Bereitstellen des Schmelzklebstoffs auf, wobei die Klebstoffversorgung 2 vorliegend einen Schmelzklebstofftank 2.1 zur Bevorratung des Schmelzklebstoffs sowie eine mit dem Schmelzklebstofftank 2.1 fluidisch dicht verbundene Klebstoffzuführung 4 zum Fördern und Transportieren des Schmelzklebstoffs in einer Fließrichtung FR umfasst.

Der Schmelzklebstofftank 2.1 ist mit einer (in den Figuren nicht dargestellten und nicht näher bezeichneten) Heizeinrichtung beheizbar, so dass der in dem Schmelzklebstofftank 2.1 vorgelegte bzw. vorgehaltene Schmelzklebstoff auf eine entsprechende Temperatur, nämlich auf eine Schmelztemperatur bzw. auf eine Verarbeitungstemperatur, erwärmt werden kann, damit der Schmelzklebstoff in viskoser, fließfähiger Form vorliegt und in dieser Beschaffenheit auch in der Klebstoffzuführung 4 in Fließrichtung FR gefördert werden kann.

Das in den Beispielen gezeigte System 1 umfasst jeweils zwei, in Reihe hintereinander geschaltete Applizierköpfe 3, 3`, von denen jeder mit einer Klebstoffdüse 3.1 ausgestattet ist. Im Betrieb des Systems 1 wird der Schmelzklebstoff über die Klebstoffdüsen 3.1 der Applizierköpfe 3, 3' ausgebracht und auf Behälter aufgetragen bzw. appliziert, das heißt, an den Applizierköpfen 3, 3' werden Appliziervorgänge durchgeführt, insbesondere in einer vorgegebenen Frequenz, wobei in jedem Appliziervorgang eine bestimmte, exakt zu dosierende Menge an Schmelzklebstoff abgegeben und auf jeweilige Behälter aufgetragen wird.

In dem System 1 wird der Schmelzklebstoff ausgehend vom Schmelzklebstofftank 2.1 in seinem erwärmten Zustand in viskoser, fließfähiger Form über die vorzugsweise ebenfalls beheizbare Klebstoffzuführung 4 in Fließrichtung FR zu den Applizierköpfen 3, 3` transportiert und diesen zugeführt. Der Schmelzklebstoff wird dabei durch die in Reihe hintereinander angeordneten Applizierköpfe 3, 3`, welche ebenfalls beheizbar ausgebildet sind, geleitet. Das Beheizen der Klebstoffzuführung 4 sowie der Applizierköpfe 3, 3' dient insbesondere dazu, ein vorzeitiges bzw. unerwünschtes Verfestigen des Schmelzklebstoffs zu verhindern.

Über die Applizierköpfe 3, 3' wird jeweils ein kleiner Anteil des Schmelzklebstoffs in den jeweiligen Appliziervorgängen durch das Auftragen auf die Behälter ausgebracht. Der mengenmäßig überwiegende Teil des an die Applizierköpfe 3, 3' zugeförderten Schmelzklebstoffs aber verbleibt im System 1.

Nach dem Passieren der Applizierköpfe 3, 3' wird der im System 1 verbleibende Schmelzklebstoff hinter dem in Fließrichtung FR gesehen zuletzt oder zuhinterst angeordneten Applizierkopf 3` über eine Klebstoffrückführung 5 wieder zu der Klebstoffversorgung 2 zurückgeführt, so dass der Schmelzklebstoff in einem geschlossenen Schmelzklebstoffkreislauf SK umlaufend bewegt bzw. gefördert wird. Auch die Klebstoffrückführung 5 kann beheizbar sein.

In der Klebstoffrückführung 5 ist eine Regelventilanordnung 6 zum Regeln eines in dem Schmelzklebstoffkreislauf SK vorherrschenden Schmelzklebstoff-Druckes p angeordnet. Der Schmelzklebstoff-Druck p kann vorliegend auch als Systemdruck verstanden werden.

Ein konstanter Schmelzklebstoff-Druck p bzw. das Einstellen des Schmelzklebstoff-Druckes p auf einen vorgegebenen, konstanten Wert ist in dem vorliegenden System 1 entscheidend dafür, dass in jedem Appliziervorgang genau und präzise die definierte, exakt vorgegebene Menge an Schmelzklebstoff auf die Behälter aufgebracht wird und dabei die Abweichungen in den jeweiligen Appliziervorgängen innerhalb eines zulässigen, sehr engen Toleranzbereiches liegen.

Mit der in dem System 1 vorgesehenen Regelventilanordnung 6 ist eine exakte Einstellung, Nachführung und Konstanthaltung des Schmelzklebstoff-Druckes p möglich, und zwar unabhängig von einem Betriebs- oder Maschinenzustand. Dabei können zudem Druckschwankungen im System 1 effektiv ausgeglichen werden.

Die Regelventilanordnung 6 des vorliegenden Systems 1 weist eine Regelventileinheit 7 auf, die ein regelbares Stellventil 8 mit einem pneumatischen Ventilantrieb zum Einstellen des Stellventils 8 umfasst, so dass das regelbare Stellventil 8 insbesondere durch geregelte Zuführung von Druckluft einstellbar ist. Das regelbare Stellventil 8 ist in den Beispielen der Figuren 1 und 2 durch ein Bypassventil, insbesondere durch ein Bypass-Sicherheitsventil realisiert, über welches der Durchfluss an Schmelzklebstoff eingestellt und geregelt werden kann. Die Regelventileinheit 7, insbesondere das regelbare Stellventil 8 ist ebenfalls wiederum beheizbar bzw. beheizt, um den Schmelzklebstoff in der erforderlichen viskosen, fließfähigen Beschaffenheit zu halten.

Zur geregelten Einstellung des Stellventils 8 weist die Regelventilanordnung 6 einen als Stellungsregler dienenden Ventilantriebsregler 10 auf, der über Bewirkung eines Stellhubs die Öffnungsstellung des Stellventils 8 in Abhängigkeit des Schmelzklebstoff-Druckes p regelt. Der Ventilantriebsregler 10 ist dazu ausgebildet, die Zuführung der Druckluft für die Einstellung des Ventilantriebs zu regeln, insbesondere derart, dass das Stellventil 8 mittels der geregelten Druckluftzuführung eine Öffnungsstellung einnimmt, um den Schmelzklebstoff-Druck p auf den vorgegebenen, konstant zu haltenden Sollwert, der der Führungsgröße des Regelkreises entspricht, einzuregeln.

Auch der Ventilantriebsregler 10 selbst nutzt Druckluft als Hilfsenergie zur Regelung des Stellhubes, das heißt zur Einstellung einer Öffnungsstellung des Stellventils 8. Die als Hilfsenergie dienende Druckluft wird in den Beispielen der Figuren 1 und 2 durch eine nicht dargestellte und nicht näher bezeichnete zentrale Druckluftversorgung bzw. durch ein Druckluftnetz bereitgestellt. Das System 1 ist an die zentrale Druckluftversorgung bzw. an das Druckluftnetz angeschlossen. Der Versorgungsdruck bzw. Netzdruck beträgt dabei etwa 6 bar, so dass die Druckluft mit etwa 6 bereitgestellt und mit diesem Eingangsdruck pE von rund 6 bar dem Ventilantriebsregler 10 zugeführt wird.

Der Ventilantriebsregler 10 regelt den Stellhub bzw. die Einstellung oder Verstellung des Stellventils 8, indem der Eingangsdruck pE der Druckluft in Abhängigkeit eines Ist-Wertes des aktuell vorherrschenden Schmelzklebstoff-Drucks p in dem Schmelzklebstoffkreislauf SK verändert wird und eingestellt wird auf einen entsprechenden, eingeregelten Ausgangsdruck pA, welcher als Ventilantrieb auf das Stellventil 8 einwirkt.

Der Ventilantriebsregler 10 kann (wie in Figur 1 dargestellt) durch ein Proportionalventil realisiert sein, über welches der Ausgangsdruck pA kontinuierlich und stufenlos veränderbar und einstellbar ist. Alternativ kann der Ventilantriebsregler 10 auch durch ein getaktet betriebenes 3/2-Wegeventil realisiert sein, wobei der Ausgangsdrucks pA durch den getakteten Betrieb des 3/2-Wegeventils getaktet und dadurch konstant eingestellt ist. Die Druckluft für die Regelung des Stellhubs zum Einstellen des Stellventils 8 wird im Falle des getaktet betriebenen 3/2-Wegeventils als pulsbreitenmodulierte Druckluft bereitgestellt.

Im Unterschied zu dem System 1 gemäß Figur 1 ist in dem in Figur 2 gezeigten Beispiel in der Klebstoffzuführung 4 eine beispielsweise als Zahnradpumpe ausgebildete Pumpeinheit 11 zum Fördern des Schmelzklebstoffs in Fließrichtung FR vorgesehen. In Fließrichtung FR nach der Pumpeinheit 11 umfasst das System 1 gemäß Figur 2 ferner eine Sicherheitsventileinheit 12, die durch ein als Überdruckventil funktionierendes Bypassventil bzw. Sicherheitsventil gebildet ist. Das Bypassventil 12 weist im dargestellten Beispiel einen Eingang und zwei Ausgänge auf, so dass in dem System 1 vermittels des Bypassventils 12 über einen der Ausgänge, insbesondere über einen Bypass-Ausgang, ein Rückfluss 15 vorgesehen ist.

Das Sicherheits- bzw. Bypassventil 12 ist vorzugsweise als Not-Aus-Ventil ausgebildet und kann beispielsweise in Reaktion auf einen unerwartet hohen Druckanstieg angesteuert bzw. eingestellt werden, um beispielsweise den Druck aus dem System 1 zu nehmen. Ein unerwarteter Druckanstieg kann sich beispielsweise in Folge eines Verkräckens des Schmelzklebers und/oder durch Verstopfen der Klebstoffdüsen 3.1 der Applizierköpfe 3, 3' oder dergleichen ergeben.

Wie außerdem aus der Darstellung der Figur 2 hervorgeht, ist in dem System 1 mindestens eine Druckmesseinrichtung 13, 13' zum Messen des Schmelzklebstoff-Drucks p vorgesehen (in Figur 1 der Einfachheit halber nicht eingezeichnet). Die Druckmesseinrichtung 13, 13' dient insbesondere als Messglied für die Regelung des Schmelzklebstoff-Drucks p auf den Sollwert. Messwerte der Druckmesseinrichtung(en) 13, 13' gehen dabei als Ist-Werte in die Regelung ein. Es versteht sich, dass die Anordnung der Druckmesseinrichtungen 13, 13' innerhalb des Schmelzklebstoffkreislaufs SK nicht auf die in Figur 2 dargestellte Variante beschränkt ist. Die Druckmesseinrichtungen 13, 13' können selbstverständlich auch an anderer Stelle des Schmelzklebstoffkreislaufs SK vorgesehen sein.

Ebenfalls aus der Darstellung der Figur 2 ersichtlich kann eine weitere Druckmesseinrichtung 14 vorgesehen sein, die derart angeordnet ist, dass sie einen Ist-Wert des Ausgangsdrucks pA des Ventilantriebsreglers 10 erfassen kann. Über eine entsprechende Rückkopplung fließt auch der Messwert der Druckmesseinrichtung 14 zusätzlich in die Regelung ein.

In dem Beispiel der Figur 2 ist der Ventilantriebsregler 10 durch ein getaktetes 3/2-Wegeventil gebildet. Es versteht sich jedoch, dass auch in der Ausführungsvariante der Figur 2 alternativ ein Proportionalventil als Ventilantriebsregler 10 eingesetzt werden kann.

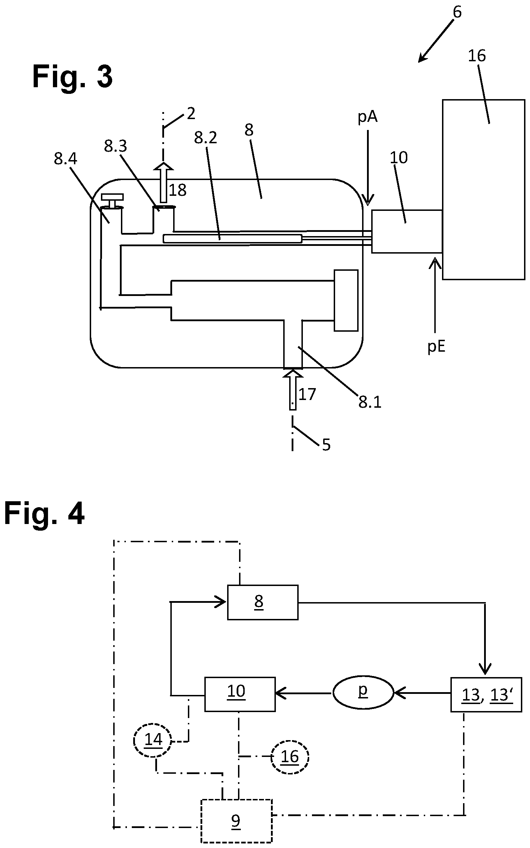

Zur besseren Veranschaulichung wird die Regelventilanordnung 6 im Folgenden mit Bezug auf die Figur 3 mehr im Detail beschrieben. Figur 3 zeigt die Regelventilanordnung 6 anhand einer sehr vereinfachten, grob schematischen Darstellung.

Das regelbare Stellventil 8 ist im Beispiel der Figur 3 als Bypassventil ausgebildet, welches zum Beispiel insbesondere auch als Sicherheitsventil dienen kann, und umfasst einen mit der Klebstoffrückführung 5 verbundenen Eingang 8.1, über den der von der Klebstoffrückführung 5 kommende Schmelzklebstoff als Eingangsstrom 17 eingeht. Das regelbare Stellventil 8 umfasst ferner zwei Ausgänge 8.3, 8.4, von denen der Ausgang 8.4 verschlossen ist. Über den Ausgang 8.3 fließt der durchfließende und dabei durchflussgeregelte Schmelzklebstoff als Ausgangsstrom 18 über den Schmelzklebstoffkreislauf SK zurück in die Klebstoffversorgung 2.

Der Durchfluss des Schmelzklebstoffs wird mit Hilfe des Stellventils 8 geregelt, und zwar über die Verstellung eines Ventilstößels 8.2. Durch die Stellbewegung des Ventilstößels 8.2 wird die Öffnung des Ausgangs 8.3 geregelt eingestellt bzw. die Öffnungsstellung des Stellventils 8 geregelt. Dabei wird der Ventilstößel 8.2 pneumatisch mit der durch den Ventilantriebsregler 10 auf den Ausgangsdruck pA eingeregelten Druckluft bewegt, und zwar entsprechend geregelt bewegt.

Die an den Ventilantriebsregler 10 bereitgestellte Druckluft wird im Beispiel der Figur 3 mit einem Eingangsdruck pE von rund 6 bar zugeführt. Zur Druckmessung kann hier vorzugsweise ein Manometer 16 vorgesehen sein. Der Ausgangsdruck pA beläuft sich in einem Bereich von ca. 2 bis 3 bar, wobei zur Messung des Ausgangsdrucks pA eine wie in Figur 2 dargestellte Druckmesseinrichtung 14 vorgesehen sein kann.

Figur 4 zeigt exemplarisch anhand eines stark vereinfachten Regelkreises die Regelung des Schmelzklebstoff-Druckes p in dem vorliegenden System 1.

Der Schmelzklebstoff-Druck p bzw. der Sollwert des Schmelzklebstoff-Druckes p definiert die Führungsgröße. Für die Regelung werden Messwerte der Druckmesseinrichtung(en) 13, 13' als Ist-Werte herangezogen. Die Druckmesseinrichtung(en) 13, 13' können somit als Messglieder angesehen werden. Ermittelte Abweichungen der Ist-Werte vom Sollwert werden, beispielsweise unter Verwendung einer Regeleinrichtung oder Regeleinheit 9, für die Regelung berücksichtigt.

Abhängig von den Ist-Werten der Druckmesseinrichtung(en) 13, 13' wird - zum Einstellen des Schmelzklebstoff-Druckes p auf den Sollwert - der Durchfluss des Schmelzklebstoffs mittels des Stellventils 8 geregelt. Hierzu wird über den Ventilantriebsregler 10 der Ausgangsdruck pA des mit Druckluft beaufschlagten Ventilantriebsreglers 10 auf einen Wert eingeregelt, derart dass die bewirkte Stellbewegung des Stellventils 8 den Durchfluss derart regelt, dass der korrespondierende Schmelzklebstoff-Druck p auf den Sollwert gebracht wird. Hierbei werden zur Regelung des Ausgangsdrucks pA auch Messwerte der Druckmesseinrichtung 14 sowie des Manometers 16 berücksichtigt.

In den Figuren nicht dargestellt, kann in den oberhalb beschriebenen Beispielen auch eine alternative Ausgestaltung des Ventilantriebsreglers 10 vorgesehen sein, und zwar derart, dass der Ventilantriebsregler 10 sowohl ein Proportionalventil wie auch ein getaktet betriebenes 3/2-Wegeventil umfasst. In dieser denkbaren und bevorzugten Ausführungsform ist das Proportionalventil dem getaktet betriebenen 3/2-Wegeventil vorgeschaltet, so dass die Druckluft dem Proportionalventil mit dem Eingangsdruck pE von rund 6 bar zugeführt wird und das getaktet betriebene 3/2-Wegeventil mit einem mittels des Proportionalventils variabel veränderbaren Druck arbeitet.

Die Erfindung wurde voranstehend an Ausführungsbeispielen beschrieben. Es versteht sich, dass eine Vielzahl von Änderungen oder Abwandlungen möglich sind, ohne dass dadurch der der Erfindung zugrundeliegende Erfindungsgedanke verlassen wird.

### Bezugszeichenliste

- 1: System zum Applizieren von Schmelzklebstoff
- 2: Klebstoffversorgung
- 2.1: Schmelzklebertank
- 3, 3`: Applizierkopf
- 3.1: Klebstoffdüse
- 4: Klebstoffzuführung
- 5: Klebstoffrückführung
- 6: Regelventilanordnung
- 7: Regelventileinheit
- 8: Stellventil
- 9: Regeleinheit
- 10: Ventilantriebsregler
- 11: Pumpeinheit
- 12: Sicherheitsventileinheit
- 13, 13': Druckmesseinrichtung
- 14: Druckmesseinrichtung
- 15: Rückfluss
- 16: Manometer
- 17: Eingangsstrom
- 18: Ausgangsstrom

- FR: Fließrichtung
- p: Schmelzklebstoff-Druck
- pA: Ausgangsdruck
- pE: Eingangsdruck
- SK: Schmelzklebstoffkreislauf

## Patentansprüche

1. System (1) zum Applizieren von Schmelzklebstoff auf Behälter, insbesondere auf Getränkebehälter, zumindest aufweisend eine Klebstoffversorgung (2) zum Bereitstellen des Schmelzklebstoffs und wenigstens einen Applizierkopf (3) mit mindestens einer Klebstoffdüse (3.1) zum Aufbringen des Schmelzklebstoffs auf die Behälter, wobei die Klebstoffversorgung (2) eine Klebstoffzuführung (4) zum Zuführen des Schmelzklebstoffs zu dem wenigstens einen Applizierkopf (3) in einer Fließrichtung (FR) umfasst, wobei das System (1) eine Klebstoffrückführung (5) zum Rückführen des Schmelzklebstoffs von dem mindestens einen Applizierkopf (3) zu der Klebstoffversorgung (2) aufweist, derart dass der Schmelzklebstoff in einem geschlossenen Schmelzklebstoffkreislauf (SK) förderbar ist, **dadurch gekennzeichnet, dass** das System (1) eine Regelventilanordnung (6) zum Regeln eines in dem Schmelzklebstoffkreislauf (SK) vorherrschenden Schmelzklebstoff-Druckes (p) aufweist.

2. System (1) nach Anspruch 1, **dadurch gekennzeichnet, dass** die Regelventilanordnung (6) zum Regeln des Schmelzklebstoff-Druckes (p) in der Klebstoffrückführung (5) angeordnet ist.

3. System (1) nach Anspruch 1 oder 2, **dadurch gekennzeichnet, dass** die Regelventilanordnung (6) eine Regelventileinheit (7) aufweist, wobei die Regelventileinheit (7) ein regelbares Stellventil (8) mit einem Ventilantrieb zum Einstellen des Stellventils (8) umfasst.

4. System (1) nach einem der vorhergehenden Ansprüche, **dadurch gekennzeichnet, dass** zum Einstellen des regelbaren Stellventils (8) ein pneumatischer Ventilantrieb vorgesehen ist, wobei das regelbare Stellventil (8) insbesondere durch geregelte Zuführung von Druckluft einstellbar ist.

5. System (1) nach einem der vorhergehenden Ansprüche, **dadurch gekennzeichnet, dass** die Regelventilanordnung (6) einen Ventilantriebsregler (10) zur geregelten Einstellung des Stellventils (8) aufweist, wobei das System (1) insbesondere wenigstens eine Regeleinrichtung aufweist, die zumindest mit der Regelventilanordnung (6) in kommunizierender Verbindung steht.

6. System (1) nach Anspruch 5, **dadurch gekennzeichnet, dass** der Ventilantriebsregler (10) ein Stellungsregler ist, der eine Öffnungsstellung des Stellventils (8) in Abhängigkeit des Schmelzklebstoff-Druckes (p) regelt.

7. System (1) nach Anspruch 5 oder 6, **dadurch gekennzeichnet, dass** der Ventilantriebsregler (10) dazu ausgebildet ist, die Zuführung von Druckluft für die Einstellung des Ventilantriebs zu regeln, insbesondere derart, dass das Stellventil (8) mittels der geregelten Druckluftzuführung eine Öffnungsstellung einnimmt, um den Schmelzklebstoff-Druck (p) auf einen vorgegebenen Sollwert einzuregeln.

8. System (1) nach Anspruch 7, **dadurch gekennzeichnet, dass** die Druckluft bei Bereitstellung an den Ventilantriebsregler (10) einen Eingangsdruck (pE) von 6 bar oder im Wesentlichen 6 bar aufweist und dass das System (1) hierfür insbesondere an eine Druckluftversorgung oder an ein Druckluftnetz mit einem Versorgungsdruck oder Netzdruck von rund 6 bar angeschlossen ist.

9. System (1) nach einem der Ansprüche 5 bis 8, **dadurch gekennzeichnet, dass** der Ventilantriebsregler (10) durch ein Proportionalventil gebildet ist, wobei insbesondere ein Ausgangsdruck (pA) des Proportionalventils kontinuierlich und stufenlos veränderbar und einstellbar ist.

10. System (1) nach einem der Ansprüche 5 bis 8, **dadurch gekennzeichnet, dass** der Ventilantriebsregler (10) durch ein Mehrwegeventil, vorzugsweise durch ein getaktet betriebenes 3/2-Wegeventil, gebildet ist, wobei bevorzugt zur Einstellung eines Ausgangsdrucks (pA) des 3/2-Wegeventils durch dessen getakteten Betrieb insbesondere eine pulsbreitenmodulierte Druckluft bereitstellbar ist.

11. System (1) nach einem der Ansprüche 5 bis 8, **dadurch gekennzeichnet, dass** der Ventilantriebsregler (10) ein Proportionalventil und ein Mehrwegeventil, vorzugsweise ein getaktet betriebenes 3/2-Wegeventil, umfasst.

12. System (1) nach einem der vorhergehenden Ansprüche, **dadurch gekennzeichnet, dass** ferner eine Pumpeinheit (11) zum Fördern des Schmelzklebstoffs in Fließrichtung (FR) vorgesehen ist, wobei die Pumpeinheit (11) vorzugsweise in der Klebstoffzuführung (4) angeordnet ist.

13. System (1) nach einem der vorhergehenden Ansprüche, **dadurch gekennzeichnet, dass** in der Klebstoffzuführung (4) eine Sicherheitsventileinheit (12), insbesondere ein als Überdruckventil funktionierendes Bypassventil vorgesehen ist.

14. System (1) nach einem der vorhergehenden Ansprüche, **dadurch gekennzeichnet, dass** mindestens eine Druckmesseinrichtung (13, 13`) zum Messen des Schmelzklebstoff-Drucks (p) vorgesehen ist, wobei die Druckmesseinrichtung (13, 13`) insbesondere als Messglied für die Regelung des Schmelzklebstoff-Drucks (p) auf einen Sollwert dient und Messwerte der Druckmesseinrichtung (13, 13`) als Ist-Werte in die Regelung eingehen.

15. Vorrichtung zur Bildung von mehrere Behälter umfassenden Verpackungseinheiten durch Verkleben der Behälter untereinander mittels applizierten Schmelzklebstoffaufträgen, umfassend ein System (1) zum Applizieren von Schmelzklebstoff gemäß einem der vorhergehenden Ansprüche.

16. Vorrichtung zur Bildung von Verpackungseinheiten nach Anspruch 15, umfassend eine Abbindestation zum Zusammenführen und/oder Zusammendrücken der mit Schmelzklebstoffaufträgen versehenen Behälter und eine der Abbindestation nachgelagerte Traggriff-Applikationseinheit zum Anbringen von Traggriffen auf die Verpackungseinheiten.

17. Verfahren zum Applizieren von Schmelzklebstoff auf Behälter, insbesondere auf Getränkebehälter, bei dem mittels einer Klebstoffversorgung (2) ein Schmelzklebstoff bereitgestellt und über eine Klebstoffzuführung (4) wenigstens einem Applizierkopf (3) mit mindestens einer Klebstoffdüse (3.1) zugeführt wird, wobei der Schmelzklebstoff mittels einer Klebstoffrückführung (5) wieder zurückgeführt wird, so dass der Schmelzklebstoff in einem geschlossenen Schmelzklebstoffkreislauf (SK) gefördert wird und wobei bei dem Verfahren über die Klebstoffdüse (3.1) Schmelzklebstoff auf die Behälter aufgebracht wird, **dadurch gekennzeichnet, dass** bei dem Verfahren ein in dem Schmelzklebstoffkreislauf (SK) vorherrschender Schmelzklebstoff-Druck (p) mittels einer Regelventilanordnung (6) auf einen Sollwert des Schmelzklebstoff-Druckes (p) geregelt wird.

18. Verfahren nach Anspruch 17, **dadurch gekennzeichnet, dass** der Schmelzklebstoff-Druck (p) in Abhängigkeit eines in dem Schmelzklebstoffkreislauf (SK) gemessenen Ist-Wertes des Schmelzklebstoff-Druckes (p) auf den Sollwert geregelt wird.
